# EUROPEAN PATENT SPECIFICATION

(11) **EP 3 812 279 B1**
(45) Date of publication and mention of the grant of the patent: **13.04.2022**
(21) Application number: 20213825.1
(22) Date of filing: 29.02.2016
(51) Int. Cl.: B64D 31/00

(54) **METHOD FOR PROCESSING A THROTTLE CONTROL SIGNAL AND ELECTRONIC SPEED CONTROL**
DROSSELSTEUERSIGNALVERARBEITUNGSVERFAHREN UND ELEKTRONISCHER DREHZAHLREGLER
PROCÉDÉ DE TRAITEMENT DE SIGNAL DE COMMANDE D'ACCÉLÉRATION ET RÉGULATEUR DE VITESSE ÉLECTRONIQUE

(43) Date of publication of application: 28.04.2021
(62) Divisional of application: 16891948.8
(73) Proprietor: SZ DJI Technology Co., Ltd., Shenzhen, Guangdong 518057 (CN)
(72) Inventor: LAN, Qiu, Shenzhen, Guangdong 518057 (CN); ZHOU, Changxing, Shenzhen, Guangdong 518057 (CN); LIU, Wanqi, Shenzhen, Guangdong 518057 (CN)
(74) Representative: Appelt, Christian W.

(56) References cited:
- US-A1- 2008 002 571
- US-B2- 8 358 578

## Description

### TECHNICAL FIELD

The present disclosure relates to the technical field of aircraft, and in particular to a method for processing a throttle control signal and to an electronic speed control.

### BACKGROUND

Being one of the most essential components in an aircraft, an electronic speed control is used to drive motor rotation for the aircraft, implementing start-stop operation and speed controlling for the aircraft.

In prior art, a throttle control line is arranged between the electronic speed control and an aircraft controller, through which the controller may transmit a throttle control signal, mostly as a PWM (Pulse Width Modulation) wave or PPM (Pulse Position Modulation) wave, to the electronic speed control during a flight. Upon receiving the throttle control signal, the electronic speed control may control the motor rotation according to the throttle control signal, implementing flight maneuvers.

A drawback in prior art is that, in practical application, the throttle control signal received by the electronic speed control may, for reasons such as damaged wirings, suffer abnormalities, e.g., throttle control signal loss or unstable signal frequency etc., preventing the electronic speed control from properly controlling the motor rotation, even leading to flight accidents in severe cases.

A drawback in prior art is that, in practical application, the throttle control signal received by the electronic speed control may, for reasons such as damaged wirings, suffer abnormalities, e.g., throttle control signal loss or unstable signal frequency etc., preventing the electronic speed control from properly controlling the motor rotation, even leading to flight accidents in severe cases.

US2008/002571A1 discloses a communication system for transmitting/receiving redundant data between a first communication device and a second communication device, using first and second lines. The first communication device transmits first transmitting data to the first line, and also delays the first transmitting data by a prescribed time and transmits the delayed transmitting data to the second line as second transmitting data. The second communication device delays first receiving data inputted from the first line by the prescribed time and generates the delayed receiving data, and selects one of the second receiving data inputted from the second line and the delayed receiving data.

US8,358,578B2 discloses a redundant communication system that includes a first control device which calculates a control command value of an electric power device, and outputs first and second command signals; a second control device which controls the electric power device on the basis of one of the first and second control command values; and primary and secondary communication lines for respectively transmitting the first and second command signals to the second control device. The second control device comprises: a primary communication line abnormality determining unit which determines that the primary communication line is abnormal when a non-reception state or an abnormality state of the first command signal continues during a predetermined period; and a control command value switching unit which selects one of the first and second control command values in a switching manner and switches the selection from the first to the second control command value within the predetermined period.

### SUMMARY

The invention is defined by independent claim 1 defining a method for processing a throttle control signal and by independent claim 10 defining an electronic speed control.

### BRIEF DESCRIPTION OF DRAWINGS

Fig. 1 is a flow diagram of a method for processing throttle control signal provided in a first embodiment of the present disclosure;
Fig. 2 is a schematic diagram of a coupling between an electronic speed control and a controller in a method for processing throttle control signal provided in the first embodiment of the present disclosure;
Fig. 3 is a flow diagram of a method for processing throttle control signal provided in a second embodiment of the present disclosure;
Fig. 4 is a flow diagram of a method for processing throttle control signal provided in a third embodiment of the present disclosure;
Fig. 5 is a flow diagram of a method for processing throttle control signal provided in a fourth embodiment of the present disclosure;
Fig. 6 is a flow diagram of a method for processing throttle control signal provided in a fifth embodiment of the present disclosure;
Fig. 7 is a schematic structural diagram of an electronic speed control provided in a sixth embodiment of the present disclosure;
Fig. 8 is a schematic structural diagram of a controller provided in a seventh embodiment of the present disclosure; and
Fig. 9 is a schematic structural diagram of a mobile platform provided in an eighth embodiment of the present disclosure.

Reference numerals:
1- Electronic speed control; 11-Processor; 12-Throttle signal interface; 13-The communication interface;
2- Controller; 21-Processor; 22-Throttle signal interface; 23-The communication interface; 3-Motor

### DESCRIPTION OF EMBODIMENTS

Now the technical solutions in embodiments of the present disclosure will be described hereunder clearly and comprehensively with reference to accompanying drawings. Obviously, the described embodiments are only some, rather than all, embodiments of the present disclosure. Any and all other embodiments obtained by persons of ordinary skill in the art based on the presently disclosed embodiments without making any creative effort shall fall into the protection scope of the present disclosure, the invention being defined exclusively by the claims.

Unless otherwise defined, all technical and scientific terms used herein carry the same meaning as those commonly understood by those skilled in the art pertaining to the present disclosure. The terms as used in the description of the present disclosure are merely for the purpose of describing specific embodiments, rather than for limiting the present disclosure. The term "and/or" used herein includes any and all combinations of one or more related listed items.

In the following, some embodiments of the present disclosure will be explained in detail in conjunction with the accompany drawings. The embodiments and the features therein may be recombined with each other, as long as incompatibility does not entail.

### First embodiment

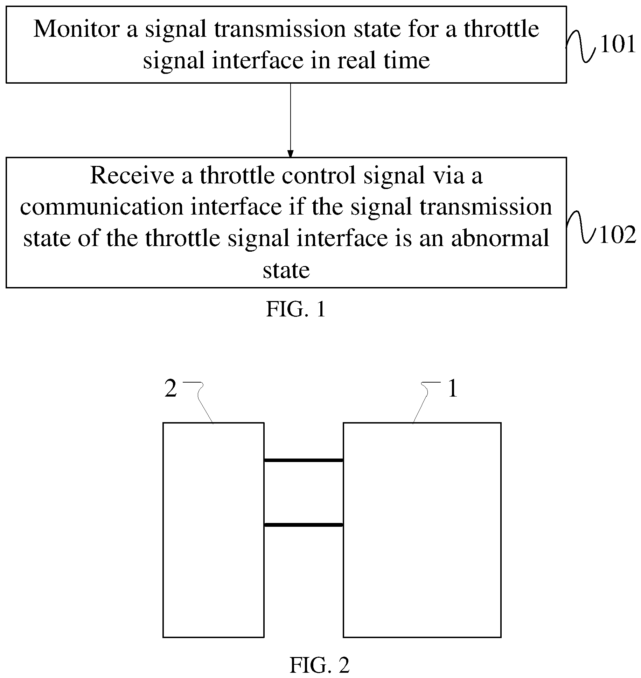

The first embodiment provides a method for processing throttle control signal. Fig. 1 is a flow diagram of a method for processing throttle control signal provided in a first embodiment of the present disclosure. As shown in Fig. 1, the method in this embodiment may include:
S101: monitoring a signal transmission state of the throttle signal interface in real time.

In particular, the method in this embodiment may be adapted to an electronic speed control. In this embodiment, the electronic speed control may receive a throttle control signal transmitted from a controller in an unmanned aircraft, and control the motor rotation of the aircraft according to the throttle control signal, realizing proper flight of the aircraft.

Fig. 2 is a schematic diagram of a coupling between an electronic speed control and a controller in a method for processing throttle control signal provided in the first embodiment of the present disclosure. As shown in Fig. 2, two channels may be arranged between the electronic speed control 1 and the controller 2, one of which is a throttle channel, and another is a communication channel.

The throttle channel may be used to transmit a throttle control signal, which may be a PWM (Pulse Width Modulation) signal or a PPM (Pulse Position Modulation) signal, etc..

The communication channel may be used for transmitting communication data. For example, the controller 2 may transmit an executable file or a debugging parameter to the electronic speed control 1 via the communication channel, thereby enabling the electronic speed control 1 to implement functions such as firmware upgrade and parameter modification, etc.. Via the communication channel, the electronic speed control 1 may transmit to the controller 2 operation data related to an operation state, as well as operation state data of the electronic speed control 1 itself, etc..

The electronic speed control 1 may be arranged with a throttle signal interface for receiving a throttle control signal, and a communication interface for transmitting communication data. The controller 2 may be arranged with a throttle signal interface for transmitting a throttle control signal, and a communication interface for transmitting communication data. The throttle signal interface and the communication interface may have a variety of implementation forms, such as a wiring, a circuit board trace, a terminal, a pin, etc., which will not be limited in this embodiment.

The throttle channels and communication channels described above may also have a variety of implementations. For example, the throttle signal interface of the electronic speed control 1 may be directly connected with the throttle signal interface of the controller 2 to form the throttle channel. Or, the throttle signal interface of the electronic speed control 1 may be electrically connected with the throttle signal interface of the controller 2 via a wiring, a circuit board trace or other components to form the throttle channel. Similarly, the communication interface of the electronic speed control 1 may be directly connected with the communication interface of the controller 2 to form the throttle channel. Or, the communication interface of the electronic speed control 1 may be electrically connected with the communication interface of the controller 2 via a wiring, a circuit board trace or other components to form the communication channel.

In this step, the electronic speed control 1 may monitor the signal transmission state of the throttle signal interface in real time. A normal signal transmission state indicates that the throttle signal interface of the electronic speed control 1 is receiving a normal throttle control signal. If the signal transmission state is abnormal, the throttle signal interface of the electronic speed control 1 is not receiving a normal throttle control signal.

In particular, the abnormal state may be that no throttle control signal is being received via the throttle signal interface, or that the throttle control signal being received via the throttle signal interface is showing abnormality.

The electronic speed control 1 may be equipped with a monitoring circuit for monitoring the signal transmission state of the throttle signal interface. For example, the monitoring circuit may determine whether the throttle control signal of the throttle signal interface is abnormal based on whether characteristic information of the throttle control signal being received via the throttle signal interface satisfies a predefined condition. The characteristic information may be frequency information and/or pulse width information of the throttle control signal.

The monitoring circuit may include a voltage detection circuit or a current detection circuit, which are used for detecting voltage information or current information of the throttle control signal being received via the throttle signal interface, respectively. The monitoring circuit may determine the characteristic information of the throttle control signal based on the voltage information or the current information of the throttle control signal, thereby determining the signal transmission state.

For example, if the monitoring circuit continuously detects zero voltage or current for the signal being received via the throttle signal interface during a predefined time period, it means no throttle control signal is being received via the throttle signal interface.

If a high level shows up every x seconds for a duration of y seconds in a signal being received via the throttle signal interface, the characteristic information of the throttle control signal being received via the throttle signal interface is: frequency of 1/x Hz and pulse width of y seconds.

Assuming that a throttle control signal is in normal state when, according to a predefined condition, its frequency is between *a* to *b* Hz, and its pulse width is between c to *d* seconds, then by comparing 1/x with *a* and *b,* and y with c and *d,* it may be determined whether the throttle control signal being received via the throttle signal interface is in normal state.

If the 1/x is not within the range of *a* to *b,* or the y is not within the range of c to *d,* the throttle control signal being received via the throttle signal interface is abnormal.

The correspondence between the characteristic information of the throttle control signal and the signal transmission state may be configured as needed, which will not be limited to the above manners.

Of course, the signal transmission state of the throttle control interface may also be determined by other components of the electronic speed control 1, which will not be defined in this embodiment.

S102: receiving the throttle control signal via the communication interface if the signal transmission state of the throttle signal interface is an abnormal state.

If the signal transmission state of the throttle signal interface is an abnormal state, the controller 2 may transmit the throttle control signal to the electronic speed control 1 via the communication channel. The electronic speed control 1 may receive the throttle control signal at the communication interface to control the motor rotation normally.

The throttle control signal may be transmitted to the throttle signal interface and the communication interface in different forms. The throttle control signal may be transmitted to the throttle signal interface in an analog signal format, such as a PWM signal or a PPM signal etc.. The throttle control signal may be transmitted to the communication interface in a digital signal format, such as frequency information or pulse width information of the PWM signal or PPM signal.

After receiving the throttle control signal in the digital signal format, the electronic speed control 1 may generate a corresponding PWM signal or PPM signal according to the throttle control signal in the digital signal format, thereby realizing control over the motor.

In practical application, the throttle channel and communication channel may both be provided between the electronic speed control 1 and the controller 2. The controller 2 may transmit communication data to the electronic speed control 1 via the communication channel, enabling the electronic speed control 1 to implement functions such as firmware upgrade and parameter update, etc.. Under ordinary conditions, the electronic speed control 1 receives the throttle control information transmitted from the controller 2 via the throttle channel to control motor rotation. When abnormality occurs to the signal transmission state of the throttle signal interface of the electronic speed control 1, the electronic speed control 1 may still obtain the throttle control signal via the communication interface, thus continuing control over the motor, ensuring normal flight of the aircraft.

According to the method for processing throttle control signal provided in this embodiment, the electronic speed control 1 is provided with a throttle signal interface for receiving a throttle control signal and a communication interface for transmitting communication data. Signal transmission state is monitored in real time for the throttle signal interface, and the throttle control signal will be received via the communication interface when the signal transmission state of the throttle signal interface is an abnormal state, enabling the electronic speed control to maintain proper control over motor rotation, preventing the aircraft from losing control over its frame arm dynamics, thereby ensuring the normal flight for, and improving the reliability of, the aircraft.

In the technical solution provided in the above embodiment, the throttle control signal received by the electronic speed control 1 via the communication interface may be transmitted by the controller 2 via the communication channel either after, or both before and after, abnormality occurs in the signal transmission state of the throttle control interface of the electronic speed control 1. Now, more explanations will be given separately in conjuncture with the second and third embodiment.

### Second embodiment

The second embodiment provides a method for processing throttle control signal. On the basis of the technical solution provided in the first embodiment, this embodiment causes the electronic speed control 1 to transmit a throttle control signal transmission fault message to the controller 2 when the signal transmission state of the throttle control interface is abnormal, so that the controller 2 transmits the throttle control signal to the electronic speed control 1 via the communication channel after receiving the throttle control signal transmission fault message.

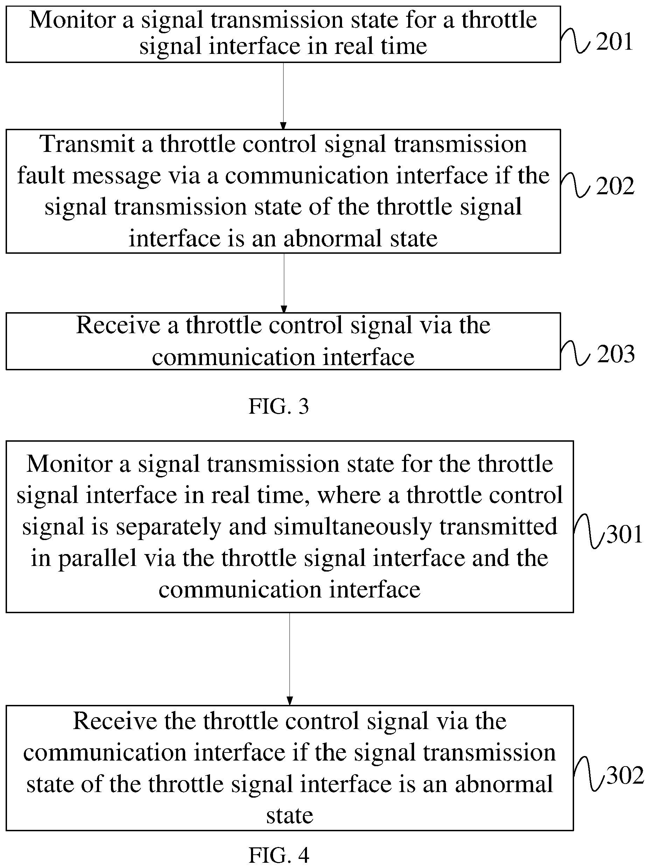

Fig. 3 is a flow diagram of a method for processing throttle control signal provided in a second embodiment of the present disclosure. As shown in Fig. 3, the method in this embodiment may include:
S201: monitoring a signal transmission state of the throttle signal interface in real time.

The S201 in this embodiment is implemented similarly according to the principle of S101 in the first embodiment, which will not be repeated herein.

In this embodiment, the controller 2 transmits the throttle control signal only via the throttle channel, and the electronic speed control 1 receives the throttle control signal only via the throttle control interface, while the signal transmission state of the throttle signal interface is a normal state.

That is to say, before the signal transmission state of the throttle signal interface is abnormal, no throttle control signal is transmitted via the communication channel.

S202, transmitting a throttle control signal transmission fault message via the communication interface if the signal transmission state of the throttle signal interface is an abnormal state.

In particular, the electronic speed control 1 may transmit the throttle control signal transmission fault message via the communication interface, so that the controller 2 may receive the throttle control signal transmission fault message via the communication channel, allowing the controller 2 to be timely informed that a fault has occurred in the throttle control signal received by the electronic speed control 1 at the throttle signal interface.

Further, the controller 2 may transmit the throttle control signal to the electronic speed control 1 via the communication channel based on the throttle control signal transmission fault message.

S203: receiving the throttle control signal via the communication interface.

Through S201 and S202, the controller 2 may transmit the throttle control signal via the communication channel when the signal transmission state of the throttle signal interface of the electronic speed control 1 is abnormal. The electronic speed control 1 described in this step, for one, may receive the throttle control signal at the communication interface, and accordingly control the motor rotation.

According to the method for processing throttle control signal provided in this embodiment, signal transmission state is monitored in real time for the throttle signal interface, and a throttle control signal transmission fault message is transmitted via the communication interface when the signal transmission state of the throttle signal interface is an abnormal state, so that the controller 2 may be timely informed that the electronic speed control 1 has encountered abnormality in receiving the throttle control signal, and that the controller 2 may transmit the throttle control signal to the electronic speed control 1 via the communication channel only when such abnormality occurs, thereby saving signal resource, effectively conserving battery power for the aircraft, and improving the endurance for the aircraft.

Further, the cause of the abnormality may be determined based on the received signal if the signal transmission state of the throttle signal interface is an abnormal state.

For example, if the voltage or current of the signal being received via the throttle signal interface is low, to the extent of being far below ordinary high level voltage or current expected of the PWM signal or PPM signal under normal conditions, insufficient battery level might be indicated. If the voltage or current of the signal being received via the throttle signal interface continues to be at zero, it might be indicated that the throttle channel between the electronic speed control 1 and the controller 2 has been disconnected.

According to the cause of the abnormality, the electronic speed control 1 may perform corresponding remedial actions. For example, enabling backup power when the battery level is low. Or, the throttle control signal transmission fault message transmitted from the electronic speed control 1 to the controller 2 may carry an associated fault ID, causing the controller 2 to perform a proper action according to the fault ID. For example, when the throttle channel is disconnected, the controller 2 may transmit information to the user to report the abnormal case.

Through the electronic speed control 1 and the controller 2, proper action is taken according to the cause of the abnormality, thus more rapidly bringing the signal transmission state of the throttle channel back to normal, further improving the reliability of the aircraft.

On the basis of the technical solution provided in the above embodiment, it is preferred that, if the signal transmission state of the throttle signal interface is back to normal state, the electronic speed control 1 may receive throttle control signal via the throttle signal interface and continue controlling the motor.

Further, if the signal transmission state of the throttle signal interface is back to normal state, the electronic speed control 1 may transmit a throttle control signal transmission restored message via the communication interface to the controller 2. After receiving the throttle control signal transmission restored message, the controller 2 may stop transmitting the throttle control signal via the communication interface.

### Third embodiment

The third embodiment provides a method for processing throttle control signal. On the basis of the technical solution provided in the first embodiment, the controller 2 in this embodiment simultaneously and separately transmits a throttle control signal in parallel through the throttle channel and the communication channel even before the signal transmission state of the throttle control interface turns abnormal.

Fig. 4 is a flow diagram of a method for processing throttle control signal provided in a third embodiment of the present disclosure. As shown in Fig. 4, the method in this embodiment may include:

S301: monitoring the signal transmission state of the throttle signal interface in real time, where the throttle control signal is separately and simultaneously transmitted in parallel to the throttle signal interface and the communication interface.

In particular, the controller 2 may, during a normal flight course of the aircraft, transmit the throttle control signal via the throttle channel and the communication channel separately. That is, the electronic speed control 1 will always, at any instant, receive the throttle control signal via both the throttle signal interface and the communication interface, regardless of whether the signal transmission state of the throttle signal interface is a normal state.

The throttle control signal may be transmitted to the throttle signal interface and the communication interface in different forms. The throttle control signal may be transmitted to the throttle signal interface in an analog signal format, while to the communication interface in a digital signal format.

In this step, the signal transmission state of the throttle signal interface may be determined in the same manner as that of S101 in the first embodiment. For example, whether the throttle control signal being received via the throttle signal interface shows any abnormality is determined based on whether characteristic information of the throttle control signal being received via the throttle signal interface meets any predefined condition.

Other than this, this embodiment also provides another determination method. The electronic speed control 1 may compare the throttle control signal being received via the throttle signal interface with the throttle control signal being received via the communication interface, and the signal transmission state of the throttle signal interface will be a normal state if the corresponding frequency information and/or pulse width information matches, or an abnormal state if otherwise.

Or, the above two manners may be re-combined in assessing the signal transmission state for the throttle signal interface, which may further the accuracy for the assessment.

For example, the signal transmission state of the throttle signal interface may be determined to be a normal state if the characteristic information of the throttle control signal being received via the throttle signal interface satisfies a predefined condition, and the throttle control signal being received via the throttle signal interface is consistent with the throttle control signal being received via the communication interface. Of course, it may also be that the signal transmission state of the throttle signal interface may be determined to be a normal state if the characteristic information of the throttle control signal being received via the throttle signal interface satisfies a predefined condition, or if the throttle control signal being received via the throttle signal interface is consistent with the throttle control signal being received via the communication interface.

S302: if the signal transmission state of the throttle signal interface is an abnormal state, receiving the throttle control signal via the communication interface.

Since the electronic speed control 1 receives the throttle control signals from the throttle signal interface and the communication interface simultaneously, it may switch to the communication interface and go on controlling the motor rotation using the throttle control signal being received via the communication interface when the signal transmission state is abnormal for the throttle signal interface.

In the method for processing throttle control signal provided in this embodiment, the throttle control signal is simultaneously and separately transmitted in parallel to the throttle signal interface and the communication interface of the electronic speed control 1, so that the electronic speed control 1 may still receive the throttle control signal via the communication interface even if the signal transmission state of the throttle signal interface is an abnormal state, and the steps are straightforward to implement.

### Fourth embodiment

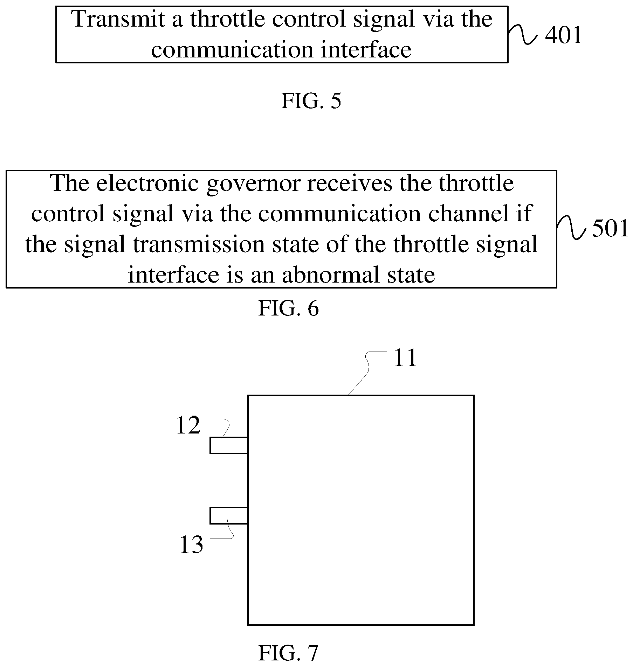

The fourth embodiment provides a method for processing throttle control signal. Fig. 5 is a flow diagram of a method for processing throttle control signal provided in a fourth embodiment of the present disclosure. As shown in Fig. 5, the method in this embodiment may include:
S401: transmitting the throttle control signal via the communication interface.

In particular, the method in this embodiment may be adapted to a controller 2. The controller 2 is arranged with a throttle signal interface for transmitting a throttle control signal, and a communication interface for transmitting communication data. The specific structure, connection with the electronic speed control 1, and the signal interaction process for the controller 2 are similar to those of the first embodiment, and none of which will be repeated herein.

In this embodiment, the controller 2 transmits a throttle control signal via the communication interface, which may include at least two implementations.

In one implementation, the throttle control signal is initially transmitted via the throttle signal interface, and then via the communication interface when the signal received at the electronic speed control 1 via the throttle signal interface is abnormal. In particular, S401 may include: receiving a throttle control signal transmission fault message via the communication interface, and transmitting the throttle control signal via the communication interface according to the message, through a process which may be understood by referring to the second embodiment.

Further, a throttle control signal transmission recovery message may be received via the communication interface, so that transmission of the throttle control signal via the communication interface may be stopped according to the throttle control signal transmission recovery message.

In another implementation, a throttle control signal may be transmitted via the communication interface even while the throttle control signal is being transmitted via the throttle signal interface. That is to say, the throttle control signal is transmitted both via the throttle signal interface and the communication interface simultaneously and separately, through a specific implementation which may be understood by referring to the third embodiment.

According to the method for processing throttle control signal provided in this embodiment, a controller 2 is provided with a throttle signal interface for transmitting a throttle control signal and a communication interface for transmitting communication data, and the controller 2 may also transmit the throttle signal via the communication interface, enabling an electronic speed control 1 to receive the throttle control signal via a communication channel and to continue controlling the motor rotation as usual when signal being received via the throttle channel is abnormal, preventing the frame arm of the aircraft from losing control over its dynamics, ensuring the normal flight of the aircraft, and improving the reliability for the aircraft.

On the basis of the technical solution provided in the above embodiment, it is preferable that the throttle control signals transmitted via the throttle signal interface and the communication interface are in different signal formats.

The throttle control signal sent via the throttle signal interface may be an analog signal, while the one via the communication interface may be a digital signal.

### Fifth embodiment

The fifth embodiment provides a method for processing throttle control signal. Fig. 6 is a flow diagram of a method for processing throttle control signal provided in a fifth embodiment of the present disclosure. As shown in Fig. 6, the method in this embodiment may include:
S501: receiving, by the electronic speed control 1, the throttle control signal via the communication channel if the signal transmission state of the throttle signal interface is an abnormal state.

In particular, the method in this embodiment may be adapted to an electronic speed control 1 and a controller 2. A throttle channel for transmitting a throttle control signal and a communication channel for transmitting communication data are arranged between the electronic speed control 1 and the controller 2. The specific structures, interconnections, and interactions for individual components in this embodiment are similar to those of the foregoing embodiments, and none of which will be repeated herein.

According to the method for processing throttle control signal provided in this embodiment, a throttle channel for transmitting a throttle control signal and a communication channel for transmitting communication data are arranged between the electronic speed control 1 and the controller 2, so that the electronic speed control 1 may receive the throttle control signal via the communication channel when the signal transmission state of the throttle channel is an abnormal state, enabling the electronic speed control 1 to maintain proper control over motor rotation, preventing the aircraft from losing control over its frame arm dynamics, thereby ensuring the normal flight for, and improving the reliability of, the aircraft.

Further, the abnormal state may be that no throttle control signal is being received via the throttle channel, or that the throttle control signal being received via the throttle channel shows abnormality.

Further, the electronic speed control 1 may determine whether the throttle control signal being received via the throttle channel is abnormal according to whether the characteristic information of the throttle control signal being received via the throttle channel satisfies a predefined condition. The characteristic information may be frequency information and/or pulse width information of the throttle control signal. If the signal transmission state is an abnormal state, the electronic speed control 1 may transmit a throttle control signal transmission fault message to the controller 2 via the communication channel, so that the controller 2 may transmit a throttle control signal to the electronic speed control 1 via the communication channel upon receiving the throttle control signal fault message.

Or, the throttle control signal may be simultaneously and separately transmitted in parallel via the throttle channel and the communication channel.

Further, the throttle control signal may be transmitted via the throttle channel and the communication channel in different forms.

The throttle control signal may be transmitted to the throttle channel in an analog signal format, while to the communication channel in a digital signal format.

Further, if the signal transmission state of the throttle channel is back to normal, the electronic speed control 1 may receive the throttle control signal via the throttle channel.

### Sixth embodiment

The sixth embodiment of this disclosure provides an electronic speed control. Fig. 7 is a schematic structural diagram of an electronic speed control provided in a sixth embodiment of the present disclosure. As shown in Fig. 7, the electronic speed control in this embodiment may include:
a processor 11; a throttle signal interface 12 for receiving a throttle control signal; and a communication interface 13 for transmitting communication data.

Here, the processor 11 receives the throttle control signal via the communication interface 13 when the signal transmission state of the throttle signal interface 12 monitored in real time is an abnormal state.

The electronic speed control in this embodiment may be used in performing the method for processing throttle control signal described in the first embodiment. The functions and the implementations of individual component of the electronic speed control in this embodiment are similar to those in the first embodiment, and none of which will be repeated herein.

The function of the processor 11 in this embodiment may be implemented using software or a hardware module. For example, the characteristic information of the throttle control signal being received via the throttle signal interface 12 may be determined using a counter, a timer and a comparer. The comparer may be used in implementing the determining whether the throttle control signal being received via the throttle signal interface 12 is abnormal according to whether the characteristic information satisfies a predefined condition. A switch may be used in implementing the switching from the throttle control interface to the communication interface 13 to receive the throttle control signal.

The electronic speed control provided in this embodiment includes a processor 11, a throttle signal interface 12 for receiving a throttle control signal, and a communication interface 13 for transmitting communication data, where the processor 11 receives the throttle control signal via the communication interface 13 when the signal transmission state of the throttle signal interface 12 is an abnormal state, so as to maintain proper control over motor rotation, preventing the aircraft from losing control over its frame arm dynamics, thereby ensuring the normal flight for, and improving the reliability of, the aircraft.

Further, the electronic speed control may also include a monitoring circuit for monitoring the signal transmission state of the throttle signal interface 12, and the monitoring circuit is communicatively connected with the processor 11 for transmitting the signal transmission state to the processor 11.

The monitoring circuit may also be implemented in a way similar to that of the first embodiment, which will not be repeated herein. The processor 11, monitoring circuit, throttle signal interface 12 and communication interface 13 may be integrated together, i.e., into a single integrated chip. Or, the processor 11, monitoring circuit, throttle signal interface 12 and communication interface 13 may be provided separately.

Further, the abnormal state may be that no throttle control signal is received via the throttle signal interface 12, or that the throttle control signal being received via the throttle signal interface 12 shows abnormality.

Further, the processor 11 may determine whether the throttle control signal being received via the throttle signal interface 12 is abnormal according to whether the characteristic information of the throttle control signal being received via the throttle signal interface 12 satisfies a predefined condition. If the signal transmission state of the throttle signal interface 12 is an abnormal state, the throttle control signal will be received via the communication interface 13. The characteristic information is frequency information and/or pulse width information of the throttle control signal.

Further, the processor 11 may transmit a throttle control signal transmission fault message via the communication interface 13 and receive the throttle control signal via the communication interface 13 when the signal transmission state of the throttle signal interface 12 is an abnormal state.

Or, the throttle control signal may be simultaneously and separately transmitted in parallel to the throttle signal interface 12 and the communication interface 13.

Further, the throttle control signal may be transmitted to the throttle signal interface 12 and the communication interface 13 in different forms. The throttle control signal may be transmitted to the throttle signal interface 12 in an analog signal format. The throttle control signal may be transmitted to the communication interface 13 in a digital signal format.

Further, the processor 11 may revert to receiving the throttle control signal via the throttle signal interface 12 when the signal transmission state of the throttle signal interface 12 is restored to a normal state.

### Seventh embodiment

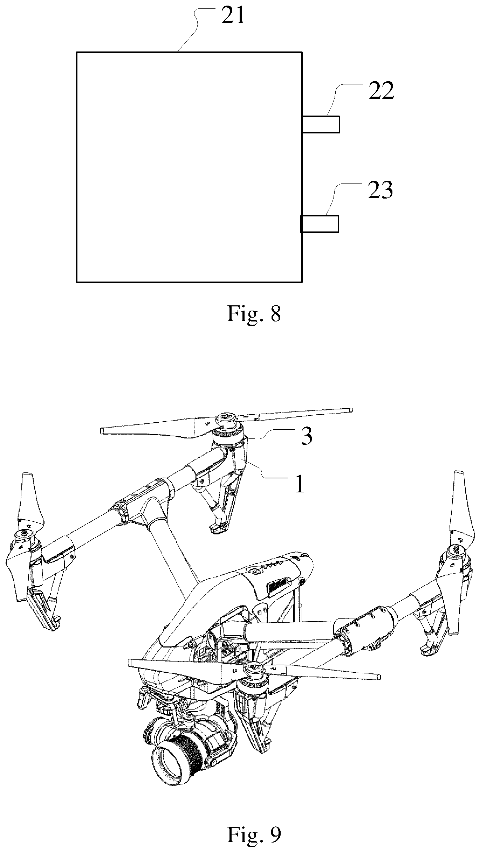

The seventh embodiment of this disclosure provides a controller. Fig. 8 is a schematic structural diagram of a controller provided in a seventh embodiment of the present disclosure. As shown in Fig. 8, the controller in this embodiment may include:
a processor 21; a throttle signal interface 22 for transmitting a throttle control signal; and a communication interface 23 for transmitting communication data.

The processor 21 may transmit a throttle control signal via the communication interface 23.

The controller in this embodiment may be used in performing the method for processing throttle control signal described in the fourth embodiment. The functions and the implementations of individual component of the controller in this embodiment are similar to those in the fourth embodiment, and none of which will be repeated herein.

A controller provided in this embodiment includes a processor 21, a throttle signal interface 22 for transmitting a throttle control signal, and a communication interface 23 for transmitting communication data. The processor 21 may also transmit the throttle signal via the communication interface, enabling an electronic speed control to receive the throttle control signal via a communication channel and continue to control the motor rotation as usual when signal being received via the throttle channel is abnormal, preventing the frame arm of the aircraft from losing control over its dynamics, ensuring the normal flight of the aircraft, and improving the reliability for the aircraft.

Further, the controller described in this embodiment may also include a throttle signal generating circuit for generating a throttle control signal, and the throttle signal generating circuit is communicatively connected with the processor 21 for transmitting the generated throttle control signal to the processor 21.

The throttle control signal may include a switch tube and other components to generate a PWM signal or a PPM signal as the throttle control signal.

The processor 21, throttle signal generating circuit, throttle signal interface 22 and communication interface 23 may be integrated together, i.e., into a single integrated chip. Or, the processor 21, throttle signal generating circuit, throttle signal interface 22 and communication interface 23 may be provided separately.

Further, the processor 21 may receive throttle control signal transmission fault information via the communication interface 23, and transmits the throttle control signal via the communication interface 23 upon the throttle control signal transmission fault information.

Or, the throttle control signal may be simultaneously and separately transmitted via the throttle signal interface 22 and the communication interface 23.

Further, the throttle control signal may be transmitted via the throttle signal interface 22 and the communication interface 23 in different forms.

The throttle control signal sent via the throttle signal interface 22 may be an analog signal,
while the one via the communication interface 23 may be a digital signal.

Further, the processor 21 may receive a throttle control signal transmission recovery message via the communication interface 23, so that transmission of the throttle control signal via the communication interface 23 may be stopped upon the throttle control signal transmission recovery message.

### Eighth embodiment

The eighth embodiment of this disclosure provides a mobile platform. Fig. 9 is a schematic structural diagram of a mobile platform provided in an eighth embodiment of the present disclosure. The mobile platform shown in Fig. 9 is an unmanned aircraft. Of course, the mobile platform may also be a camera cradle, a remotely controlled fighting vehicle, or other devices, which will not be defined in this embodiment. Fig. 9 is only for illustrating the structure of a mobile platform as an example.

As shown in Fig. 9, the mobile platform provided in this embodiment may include: a motor 3; a controller (not shown); and an electronic speed control 1, where
the motor 3 is connected with the electronic speed control 1;
a throttle channel for transmitting a throttle control signal and a communication channel for transmitting communication data are arranged between the electronic speed control 1 and the controller,
where the controller transmits a throttle control signal to the electronic speed control 1 via the throttle channel; and the electronic speed control 1 receives the throttle control signal via the communication channel when the signal transmission state of the throttle channel is an abnormal state.

The mobile platform in this embodiment may be used in performing the method for processing throttle control signal described in the fifth embodiment. The functions and the implementations of individual component of the mobile platform in this embodiment are similar to those in the fifth embodiment, and none of which will be repeated herein.

The mobile platform provided in this embodiment includes a motor 3, a controller, an electronic speed control 1, a throttle channel for transmitting a throttle control signal and a communication channel for transmitting communication data arranged between the electronic speed control 1 and the controller, where the electronic speed control 1 may receive the throttle control signal via the communication channel when the signal transmission state of the throttle channel is an abnormal state, so as to maintain proper control over the rotation of the motor 3, preventing the aircraft from losing control over its frame arm dynamics, thereby ensuring the normal flight for, and improving the reliability of, the aircraft.

Further, the abnormal state may be that no throttle control signal is received via the throttle channel, or the throttle control signal being received via the throttle channel is exhibiting abnormality.

Further, the electronic speed control 1 may determine whether the throttle control signal being received via the throttle channel is abnormal according to whether the characteristic information of the throttle control signal being received via the throttle channel satisfies a predefined condition.

Further, the characteristic information may be frequency information and/or pulse width information of the throttle control signal.

Further, if the signal transmission state is an abnormal state, the electronic speed control 1 may transmit a throttle control signal transmission fault message to the controller via the communication channel.

Accordingly, the controller may transmit the throttle control signal to the electronic speed control 1 via the communication channel based on the throttle control signal fault message.

Or, the throttle control signal may be simultaneously and separately transmitted in parallel via the throttle channel and the communication channel.

Further, the throttle control signal may be transmitted to the throttle channel and the communication channel in different forms.

The throttle control signal may be transmitted to the throttle channel in an analog signal format, while to the communication channel in a digital signal format.

Further, the electronic speed control 1 may receive the throttle control signal via the throttle channel if the signal transmission state of the throttle channel is back to normal.

In the several embodiments provided in the present disclosure, it should be understood that, the disclosed device and method involved may be implemented in other ways. For example, the device embodiments described above are merely illustrative, e.g. the modules or units are categorized according to logical functions only, and other categories can be used in actual implementations. For instance, multiple units or components may be combined or integrated into another system, or some features can be omitted or skipped. Moreover, an illustrated or discussed coupling or direct coupling or communication connection may be an indirect coupling or communicative connection an interface, device or unit, and may be in electrical, mechanical, or other forms.

The units described as separate members may be or may not be physically separated. The members shown as units may be or may not be physical units, and may be located at the same place or may be distributed in multiple network units. Some or all of the elements may be selected according to the actual needs for realizing the objectives of the solutions of the embodiments.

In addition, various functional units in various embodiments of the present disclosure may be integrated into a single processing unit, or each unit may be presented in physically separated forms, or two or more units may be integrated into a single unit. The above-mentioned integrated unit can be implemented in the form of hardware or a software functional unit.

The integrated unit may, if implemented in a form of a software functional unit and marketed or used as a standalone product, be stored in a computer-readable storage medium. Based on these understandings, the essence of the technical solution of this disclosure, or the part thereof contributing to the prior art, or all or part of the technical solution may be embodied in the form of a software product. The computer software product may be stored in a storage medium, and may include a number of instructions that can cause a computer processor to carry out all or part of the steps in various embodiments of this disclosure. The storage medium described above may include a USB disk, a mobile hard disk, a read-only memory (ROM), a random access memory (RAM), a magnetic disk, an optical disk, and the like, each of which can store program code.

Finally, it should be noted that the foregoing embodiments are merely intended for describing, rather than limiting, the technical solutions of the present disclosure. Although the present disclosure is described in detail with reference to the foregoing embodiments, persons of ordinary skill in the art should understand that it remains possible to make modifications to the technical solutions described in the foregoing embodiments, as long as they do not depart from the scope of the appended claims.

## Claims

1. A method for processing a throttle control signal, wherein a throttle channel for transmitting the throttle control signal and a communication channel for transmitting communication data are arranged between an electronic speed control (1) and a controller (2), and the method comprises:
receiving, by the electronic speed control (1), the throttle control signal via the communication channel if a signal transmission state of the throttle channel is in an abnormal state; and
receiving, by the electronic speed control (1), the throttle control signal via the throttle channel when the signal transmission state of the throttle channel is in a normal state.

2. The method according to claim 1, wherein the abnormal state is that no throttle control signal is being received via the throttle channel, or that the throttle control signal being received via the throttle channel shows unstable signal frequency.

3. The method according to claim 2, further comprising:
determining, by the electronic speed control (1), whether the throttle control signal being received via the throttle channel is abnormal according to whether the characteristic information of the throttle control signal being received via the throttle channel satisfies a predefined condition.

4. The method according to claim 3, wherein the characteristic information is frequency information, and/or pulse width information, of the throttle control signal.

5. The method according to claim 1, further comprising:
transmitting, by the electronic speed control (1), a throttle control signal transmission fault message to the controller (2) via the communication channel if the signal transmission state is an abnormal state, causing the controller (2) to transmit a throttle control signal to the electronic speed control (1) via the communication channel according to the throttle control signal fault message.

6. The method according to claim 1, wherein the throttle control signal is separately and simultaneously transmitted in parallel via the throttle channel and the communication channel.

7. The method according to claim 1, wherein the throttle control signal is in different signal formats when being transmitted via the throttle signal channel and the communication channel.

8. The method according to claim 7, wherein the throttle control signal is transmitted via the throttle channel in an analog signal format.

9. The method according to claim 7, wherein the throttle control signal is transmitted via the communication channel in a digital signal format.

10. An electronic speed control (1), comprising: a processor; a throttle signal interface (12) for receiving a throttle control signal; and a communication interface (13) for transmitting communication data,
wherein the processor is configured to receive the throttle control signal via the communication interface (13) when the signal transmission state of the throttle signal interface (12) monitored in real time is an abnormal state, and
wherein the processor is configured to receive the throttle control signal via the throttle signal interface (12) when the signal transmission state of the throttle signal interface (12) is in a normal state.

11. The electronic speed control (1) according to claim 10, further comprising a monitoring circuit for monitoring the signal transmission state for the throttle signal interface (12), wherein the monitoring circuit is communicatively connected with the processor for transmitting the signal transmission state to the processor.

12. The electronic speed control (1) according to claim 11, wherein the processor, the monitoring circuit, the throttle signal interface (12) and the communication interface (13) are integrated together.

13. The electronic speed control (1) according to claim 11, wherein the processor, the monitoring circuit, the throttle signal interface (12) and the communication interface (13) are provided separately.

14. An unmanned aircraft, comprising:
a motor (3);
a controller (2);
an electronic speed control (1) according to claims 10-13, wherein the motor (3) is connected with the electronic speed control (1);
a throttle channel for transmitting a throttle control signal, wherein the throttle channel is arranged between the electronic speed control (1) and the controller;
a communication channel for transmitting communication data, wherein the communication channel is arranged between the electronic speed control (1) and the controller (2);
wherein the controller (2) is configured to transmit the throttle control signal to the electronic speed control (1) via the throttle channel; and
wherein the electronic speed control (1) is configured to receive the throttle control signal transmitted from the controller (2) and to control a rotation of the motor (3) according to the throttle control signal.

15. The unmanned aircraft according to claim 14, wherein the abnormal state is that no throttle control signal is being received via the throttle channel, or that the throttle control signal being received via the throttle channel shows unstable signal frequency.

## Patentansprüche

1. Verfahren zum Verarbeiten eines Drosselsteuersignals, wobei ein Drosselkanal zum Übertragen des Drosselsteuersignals und ein Kommunikationskanal zum Übertragen von Kommunikationsdaten zwischen einem elektronischen Drehzahlregler (1) und einer Steuereinheit (2) angeordnet sind, und das Verfahren Folgendes umfasst:
Empfangen, durch den elektronischen Drehzahlregler (1), des Drosselsteuersignals über den Kommunikationskanal, falls ein Signalübertragungszustand des Drosselkanals in einem abnormalen Zustand ist; und
Empfangen, durch den elektronischen Drehzahlregler (1), des Drosselsteuersignals über den Drosselkanal, wenn der Signalübertragungszustand des Drosselkanals in einem normalen Zustand ist.

2. Verfahren nach Anspruch 1, wobei der abnormale Zustand der ist, dass kein Drosselsteuersignal über den Drosselkanal empfangen wird, oder dass das über den Drosselkanal empfangene Drosselsteuersignal instabile Signalfrequenz zeigt.

3. Verfahren nach Anspruch 2, weiter umfassend:
Bestimmen, durch den elektronischen Drehzahlregler (1), ob das über den Drosselkanal empfangene Drosselsteuersignal abnormal ist, abhängig davon, ob die über den Drosselkanal empfangenen Eigenschaftsinformationen des Drosselsteuersignals eine vorgegebene Bedingung erfüllen.

4. Verfahren nach Anspruch 3, wobei die Eigenschaftsinformationen Frequenzinformationen und/oder Pulsweiteninformationen des Drosselsteuersignals sind.

5. Verfahren nach Anspruch 1, weiter umfassend:
Übertragen, durch den elektronischen Drehzahlregler (1), einer Drosselsteuersignalübertragungsfehlernachricht an die Steuereinheit (2) über den Kommunikationskanal, falls der Signalübertragungszustand in einem abnormalen Zustand ist, was die Steuereinheit (2) veranlasst, ein Drosselsteuersignal über den Kommunikationskanal entsprechend der Drosselsteuersignalfehlernachricht an den elektronischen Drehzahlregler (1) zu übertragen.

6. Verfahren nach Anspruch 1, wobei das Drosselsteuersignal separat und gleichzeitig parallel über den Drosselkanal und den Kommunikationskanal übertragen wird.

7. Verfahren nach Anspruch 1, wobei das Drosselsteuersignal in unterschiedlichen Signalformaten ist, wenn es über den Drosselsignalkanal und den Kommunikationskanal übertragen wird.

8. Verfahren nach Anspruch 7, wobei das Drosselsteuersignal über den Drosselkanal in einem analogen Signalformat übertragen wird.

9. Verfahren nach Anspruch 7, wobei das Drosselsteuersignal über den Kommunikationskanal in einem digitalen Signalformat übertragen wird.

10. Elektronischer Drehzahlregler (1), umfassend: einen Prozessor; eine Drosselsignalschnittstelle (12) zum Empfangen eines Drosselsteuersignals; und eine Kommunikationsschnittstelle (13) zum Übertragen von Kommunikationsdaten,
wobei der Prozessor konfiguriert ist, das Drosselsteuersignal über die Kommunikationsschnittstelle (13) zu empfangen, wenn der in Echtzeit überwachte Signalübertragungszustand der Drosselsignalschnittstelle (12) in einem abnormalen Zustand ist, und
wobei der Prozessor konfiguriert ist, das Drosselsteuersignal über die Drosselsignalschnittstelle (12) zu empfangen, wenn der Signalübertragungszustand der Drosselsignalschnittstelle (12) in einem normalen Zustand ist.

11. Elektronischer Drehzahlregler (1) nach Anspruch 10, weiter umfassend eine Überwachungsschaltung zum Überwachen des Signalübertragungszustands der Drosselsignalschnittstelle (12), wobei die Überwachungsschaltung kommunikativ mit dem Prozessor verbunden ist, um den Signalübertragungszustand an den Prozessor zu übertragen.

12. Elektronischer Drehzahlregler (1) nach Anspruch 11, wobei der Prozessor, die Überwachungsschaltung, die Drosselsignalschnittstelle (12) und die Kommunikationsschnittstelle (13) miteinander integriert sind.

13. Elektronischer Drehzahlregler (1) nach Anspruch 11, wobei der Prozessor, die Überwachungsschaltung, die Drosselsignalschnittstelle (12) und die Kommunikationsschnittstelle (13) separat bereitgestellt sind.

14. Unbemanntes Flugzeug, umfassend:
einen Motor (3);
eine Steuereinheit (2);
einen elektronischen Drehzahlregler (1) nach den Ansprüchen 10-13, wobei der Motor (3) mit dem elektronischen Drehzahlregler (1) verbunden ist;
einen Drosselkanal zum Übertragen eines Drosselsteuersignals, wobei der Drosselkanal zwischen dem elektronischen Drehzahlregler (1) und der Steuereinheit angeordnet ist;
einen Kommunikationskanal zum Übertragen von Kommunikationsdaten, wobei der Kommunikationskanal zwischen dem elektronischen Drehzahlregler (1) und der Steuereinheit (2) angeordnet ist;
wobei die Steuereinheit (2) konfiguriert ist, das Drosselsteuersignal über den Drosselkanal an den elektronischen Drehzahlregler (1) zu übertragen; und
wobei der elektronische Drehzahlregler (1) konfiguriert ist, das von der Steuereinheit (2) übertragene Drosselsteuersignal zu empfangen und eine Drehung des Motors (3) gemäß dem Drosselsteuersignal zu steuern.

15. Unbemanntes Flugzeug nach Anspruch 14, wobei der abnormale Zustand ist, dass kein Drosselsteuersignal über den Drosselkanal empfangen wird, oder dass das über den Drosselkanal empfangene Drosselsteuersignal instabile Signalfrequenz vorweist.

## Revendications

1. Procédé de traitement d'un signal de commande des gaz, dans lequel un canal des gaz destiné à transmettre le signal de commande des gaz, et un canal de communication destiné à transmettre des données de communication, sont agencés entre un module de régulation électronique de vitesse (1) et un régulateur (2), et dans lequel le procédé comprend les étapes ci-dessous consistant à :
recevoir, par le biais du module de régulation électronique de vitesse (1), le signal de commande des gaz, par l'intermédiaire du canal de communication, si un état de transmission de signal du canal des gaz est dans un état anormal ; et
recevoir, par le biais du module de régulation électronique de vitesse (1), le signal de commande des gaz, par l'intermédiaire du canal de gaz, lorsque l'état de transmission de signal du canal de gaz est dans un état normal.

2. Procédé selon la revendication 1, dans lequel, à l'état anormal, aucun signal de commande des gaz n'est reçu par l'intermédiaire du canal des gaz, ou le signal de commande des gaz reçu par l'intermédiaire du canal des gaz présente une fréquence de signal instable.

3. Procédé selon la revendication 2, comprenant en outre l'étape ci-dessous consistant à :
déterminer, par le biais du module de régulation électronique de vitesse (1), si le signal de commande des gaz reçu par l'intermédiaire du canal des gaz est anormal, selon que les informations de caractéristiques du signal de commande des gaz reçu par l'intermédiaire du canal des gaz satisfont une condition prédéfinie.

4. Procédé selon la revendication 3, dans lequel les informations de caractéristiques sont des informations de fréquence, et/ou des informations d'impulsions en durée, du signal de commande des gaz.

5. Procédé selon la revendication 1, comprenant en outre l'étape ci-dessous consistant à :
transmettre, par le biais du module de régulation électronique de vitesse (1), un message de défaut de transmission de signal de commande des gaz, au régulateur (2), par l'intermédiaire du canal de communication, si l'état de transmission de signal est un état anormal, amenant le régulateur (2) à transmettre un signal de commande des gaz au module de régulation électronique de vitesse (1) par l'intermédiaire du canal de communication selon le message de défaut de transmission de signal de commande des gaz.

6. Procédé selon la revendication 1, dans lequel le signal de commande des gaz est transmis séparément et simultanément en parallèle, par l'intermédiaire du canal des gaz et du canal de communication.

7. Procédé selon la revendication 1, dans lequel le signal de commande des gaz est dans des formats de signaux différents lorsqu'il est transmis par l'intermédiaire du canal des gaz et du canal de communication.

8. Procédé selon la revendication 7, dans lequel le signal de commande des gaz est transmis par l'intermédiaire du canal de gaz dans un format de signal analogique.

9. Procédé selon la revendication 7, dans lequel le signal de commande des gaz est transmis par l'intermédiaire du canal de communication dans un format de signal numérique.

10. Commande électronique de vitesse (1), comprenant: un processeur; une interface de signal des gaz (12) destinée à recevoir un signal de commande des gaz ; et une interface de communication (13) destinée à transmettre des données de communication ;
dans lequel le processeur est configuré de manière à recevoir le signal de commande des gaz par l'intermédiaire de l'interface de communication (13), lorsque l'état de transmission de signal de l'interface de signal des gaz (12) surveillé en temps réel est un état anormal ; et
dans lequel le processeur est configuré de manière à recevoir le signal de commande des gaz par l'intermédiaire de l'interface de signal des gaz (12), lorsque l'état de transmission de signal de l'interface de signal des gaz (12) est dans un état normal.

11. Commande électronique de vitesse (1) selon la revendication 10, comprenant en outre un circuit de surveillance destiné à surveiller l'état de transmission de signal pour l'interface de signal des gaz (12), dans lequel le circuit de surveillance est connecté en communication au processeur pour transmettre l'état de transmission de signal au processeur.

12. Commande électronique de vitesse (1) selon la revendication 11, dans laquelle le processeur, le circuit de surveillance, l'interface de signal des gaz (12) et l'interface de communication (13) sont intégrés ensemble.

13. Commande électronique de vitesse (1) selon la revendication 11, dans laquelle le processeur, le circuit de surveillance, l'interface de signal des gaz (12) et l'interface de communication (13) sont fournis séparément.

14. Aéronef sans pilote, comprenant :
un moteur (3) ;
un régulateur (2) ;
un module de régulation électronique de vitesse (1) selon les revendications 10 à 13, dans lequel le moteur (3) est connecté au module de régulation électronique de vitesse (1) ;
un canal de gaz destiné à transmettre un signal de commande des gaz, dans lequel le canal de gaz est agencé entre le module de régulation électronique de vitesse (1) et le régulateur ;
un canal de communication destiné à transmettre des données de communication, dans lequel le canal de communication est agencé entre le module de régulation électronique de vitesse (1) et le régulateur (2) ;
dans lequel le régulateur (2) est configuré de manière à transmettre le signal de commande des gaz au module de régulation électronique de vitesse (1) par l'intermédiaire du canal des gaz ; et
dans lequel le module de régulation électronique de vitesse (1) est configuré de manière à recevoir le signal de commande des gaz transmis à partir du régulateur (2) et à réguler une rotation du moteur (3) selon le signal de commande des gaz.

15. Aéronef sans pilote selon la revendication 14, dans lequel, à l'état anormal, aucun signal de commande des gaz n'est reçu par l'intermédiaire du canal des gaz, ou, le signal de commande des gaz reçu par l'intermédiaire du canal des gaz présente une fréquence de signal instable.
